# EUROPEAN PATENT APPLICATION

(11) **EP 4 765 242 A1**
(43) Date of publication of application: **24.06.2026**
(21) Application number: 25224978.4
(22) Date of filing: 18.12.2025
(51) Int. Cl.: H01M 4/36, H01M 4/38, H01M 4/62, C01B 33/02, C01B 33/06, C22C 29/18, C22C 32/00

(54) **ELECTRODE ACTIVE MATERIAL AND METHOD FOR PRODUCING ELECTRODE ACTIVE MATERIAL**

(30) Priority: 20.12.2024 JP 2024225617
(71) Applicant: Daido Steel Co., Ltd., Nagoya-shi Aichi 461-8581 (JP)
(72) Inventor: TANAKA, Yuki, Nagoya-shi, Aichi, 457-8545 (JP); KIMURA, Yuta, Nagoya-shi, Aichi, 457-8545 (JP); SHIMOMURA, Kyohei, Nagoya-shi, Aichi, 457-8545 (JP); HAMADA, Yuki, Nagoya-shi, Aichi, 457-8545 (JP)
(74) Representative: Diehl & Partner

(57) **Abstract**

An electrode active material including: a powder material that contains a Si phase composed of Si in which an element X is dissolved and a SiX compound phase composed of a compound of Si and the element X, in which the powder material has a cumulative 50% particle diameter D50 of 0.1 µm or more and 1.0 µm or less and a cumulative 99% particle diameter D99 of 3.0 µm or less, and the element X is at least one selected from Fe, Ti, Cr, Mn, Co, Ni, Zr, B, and P.

## Description

### TECHNICAL FIELD

The present invention relates to an electrode active material and a method for producing an electrode active material, and more particularly relates to an electrode active material that contains Si and that can be used as an electrode active material for a negative electrode of a lithium ion secondary battery, and a method for producing such an electrode active material.

### BACKGROUND ART

In the related art, graphite has been generally used as an electrode active material constituting a negative electrode of a lithium ion secondary battery. However, since the graphite has a low theoretical capacity, there is a limit to achieving a high capacity by using the graphite as a main component of the electrode active material. Therefore, Si, which is one of materials exhibiting a higher theoretical capacity than the graphite, is used as the electrode active material.

In the lithium ion secondary battery, the negative electrode occludes Li ions during charging and releases the Li ions during discharging. When the negative electrode is configured using Si as the electrode active material, the capacity can be increased as described above. However, since significant expansion and contraction occur when occluding and releasing the Li ions, the electrode active material is more likely to be broken as charging and discharging cycles are repeated. When the electrode active material is broken, a conductive path is gradually lost in the negative electrode, and the characteristics of the lithium ion secondary battery deteriorate.

In the electrode active material constituting the negative electrode of the lithium ion secondary battery, there is a method in which the electrode active material is constituted using fine Si particles as one of methods of improving maintainability of battery characteristics, that is cycle characteristics, when the charging and discharging cycles are repeated. By refining the Si particles, even when the expansion occurs due to occlusion of Li ions, collapse of the particles due to contact between the Si particles is prevented. An electrode active material using fine Si-containing particles to improve cycle characteristics is disclosed in, for example, Patent Literature 1.

Patent Literature 1: JP2024-512562A

### SUMMARY OF INVENTION

In an electrode active material using Si for a lithium ion secondary battery, by refining particles containing Si as described above, collapse of the particles due to repeated charging and discharging can be prevented, and cycle characteristics can be improved. However, when fine powder is mechanically produced, a wet pulverizing device is usually used, and aggregation of fine particles occurs during drying after pulverization, which makes it difficult to control a particle diameter. When the powder is too fine, a specific surface area of the powder increases, a large amount of binder is required when the powder is formed together with the binder to produce an electrode, and a proportion of Si in the entire electrode decreases. In addition, too fine powder has low handleability. It is desired to develop an electrode active material exhibiting high cycle characteristics while avoiding excessive refinement of particles containing Si.

An object of the present invention is to provide an electrode active material that is a powder material containing Si and can be used as an electrode active material for a negative electrode of a lithium ion secondary battery, and can obtain high cycle characteristics without excessively refining particles, and a method for producing such an electrode active material.

In order to solve the above-mentioned problems, the electrode active material according to the present invention and the method for producing an electrode active material according to the present invention have the following configurations [1] to [10]. The following configurations [1] to [6] relate to a first embodiment of the electrode active material according to the present invention, and the following configuration [10] relates to a second embodiment of the electrode active material according to the present invention.
[1] An electrode active material including:
   a powder material that contains a Si phase composed of Si in which an element X is dissolved and a SiX compound phase composed of a compound of Si and the element X, in which
   the powder material has a cumulative 50% particle diameter D50 of 0.1 µm or more and 1.0 µm or less and a cumulative 99% particle diameter D99 of 3.0 µm or less, and
   the element X is at least one selected from Fe, Ti, Cr, Mn, Co, Ni, Zr, B, and P.
[2] The electrode active material according to the above [1], in which the powder material further contains an XY compound phase composed of a compound of the element X and an element Y, and the element Y is at least one of Sn and Al.
[3] The electrode active material according to the above [1] or [2], in which the powder material further contains a CuY compound phase composed of a compound of Cu and an element Y, and
   the element Y is at least one of Sn and Al.
[4] The electrode active material according to any one of the above [1] to [3], in which the element X includes Fe.
[5] The electrode active material according to any one of the above [1] to [4], further including: at least one of a conductive additive mixed with the powder material and a coating of a conductive material covering a particle surface of the powder material.
[6] The electrode active material according to the above [5], in which the powder material includes a carbon coating on the particle surface.
[7] A method for producing an electrode active material, the method including:
   an atomization step of preparing a Si alloy powder containing Si and an element X by an atomization method;
   a pulverization step of pulverizing the Si alloy powder by a wet pulverization method to obtain a slurry in which particles containing a Si phase composed of Si in which the element X is dissolved and a SiX compound phase composed of a compound of Si and the element X are dispersed;
   a granulation step of obtaining granules by a spray drying method from a mixture obtained by mixing the slurry with a binder; and
   a disintegration step of disintegrating the granules, in which
   the atomization step, the pulverization step, the granulation step, and the disintegration step are carried out in this order,
   the electrode active material includes a powder material containing the Si phase and the SiX compound phase, and
   the element X is at least one selected from Fe, Ti, Cr, Mn, Co, Ni, Zr, B, and P.
[8] The method for producing an electrode active material according to the above [7], further including:
   a heat treatment step of removing at least a part of the binder in the granules by performing a heat treatment on the granules between the granulation step and the disintegration step.
[9] The method for producing an electrode active material according to the above[ 7] or [8], in which the powder material has, in a particle size distribution, a cumulative 50% particle diameter D50 of 0.1 µm or more and 1.0 µm or less, and a cumulative 99% particle diameter D99 of 3.0 µm or less.
[10] An electrode active material produced by the method for producing an electrode active material according to any one of the above [7] to [9].

The first embodiment of electrode active material according to the present invention having the above configuration of the above [1] includes a powder material containing a Si phase and a Si compound phase, and is a constituent material of an electrode active material exhibiting a high capacity. Furthermore, D50 of the powder material is 0.1 µm or more, and excessive refinement of the powder material is prevented. Therefore, the aggregation of the particles is prevented, it is easy to control the particle diameter to a predetermined particle diameter, and it is not necessary to use an excessive binder when forming into an electrode. In addition, the handleability of the powder material is also improved. On the other hand, by setting D50 to 1.0 µm or less, when the electrode active material is used as a constituent material of a negative electrode of a lithium ion secondary battery, a density of an active material in the negative electrode can be increased, excellent battery characteristics can be obtained, collapse of particles due to expansion accompanying occlusion of Li ions is prevented, and high cycle characteristics can be obtained. Furthermore, by setting D99 to 3.0 µm or less, a sharp particle size distribution in which a distribution range of the particle diameter is kept small is obtained, and thus the electrode active material exhibits battery characteristics such as high cycle characteristics with high homogeneity.

In the aspect of the above [2], since the powder material further contains the XY compound phase, a high effect of preventing the collapse of the particles due to the expansion accompanying the occlusion of Li ions is obtained. The powder material may contain a Y phase composed of a simple substance of the element Y in addition to the XY compound phase.

In the aspect of the above [3], since the powder material further contains the CuY compound phase, a high effect of preventing the collapse of the particles due to the expansion accompanying the occlusion of Li ions is obtained.

In the aspect of the above [4], since the element X includes Fe, it is possible to obtain an electrode active material that exhibits excellent cycle characteristics while reducing the material cost.

In the aspect of the above [5], the electrode active material further includes at least one of the conductive additive mixed with the powder material and the coating of the conductive material covering the particle surface of the powder material. By mixing the conductive additive or forming the conductive coating, low conductivity of Si is compensated, and a high effect of improving battery characteristics such as cycle characteristics is obtained.

In the aspect of the above [6], the carbon coating is formed on the particle surface of the powder material. The carbon coating can be easily formed on the particle surface of the powder material, and a particularly high effect is obtained in improving the battery characteristics due to the improved conductivity.

In the method for producing an electrode active material according to the present invention having the above configuration of the above [7], the electrode active material including the powder material that contains the Si phase and the SiX compound phase and includes the aggregate of the small particles can be produced by obtaining the granules containing the Si phase and the SiX compound phase by the atomization step, the pulverization step, and the granulation step, followed by performing the disintegration step to disintegrate the granules. It is possible to reduce the diameter of the powder material while preventing agglomerate of the small particles by performing disintegration after the wet pulverization step and the granulation step. However, the disintegration is unlikely to cause an extreme reduction in diameter, and it is easy to obtain a powder material with a sharp particle size distribution that is kept within a narrow range. Therefore, it is possible to produce an electrode active material that exhibits high cycle characteristics with high homogeneity while preventing excessive refinement of the powder material.

In the aspect of the above [8], the heat treatment step of removing at least a part of the binder in the granules by performing the heat treatment on the granules is carried out between the granulation step and the disintegration step. By removing the binder in the heat treatment step, particles constituting the granules are easily separated from each other through the subsequent disintegration step. Accordingly, it is easy to reduce the particle diameter and achieve a sharp particle size distribution in the powder material.

In the aspect of the above [9], in the particle size distribution of the powder material, the cumulative 50% particle diameter D50 is 0.1 µm or more and 1.0 µm or less, and the cumulative 99% particle diameter D99 is 3.0 µm or less. In this case, the electrode active material to be produced has a particularly excellent effect of exhibiting high cycle characteristics while preventing excessive refinement of particles.

The electrode active material according to the second embodiment of the present invention having the above configuration of the above [10] is produced by the method for producing an electrode active material of the present invention, in particular, is produced through the disintegration step after the granulation step, and thus, the electrode active material according to the second embodiment exhibits a high effect of improving cycle characteristics without excessively refining particles.

### BRIEF DESCRIPTION OF DRAWINGS

FIGURE shows measurement results of X-ray diffraction for Example 35.

### DESCRIPTION OF EMBODIMENTS

Hereinafter, an electrode active material and a method for producing an electrode active material according to an embodiment of the present invention will be described in detail.

### [Electrode Active Material]

First, a configuration of an electrode active material according to an embodiment of the present invention will be described. The electrode active material according to the present embodiment can be used as a constituent material of a negative electrode of a lithium ion secondary battery, and functions as an active material in the negative electrode.

### (1) Component composition

The electrode active material according to the present embodiment includes a powder material containing Si and other elements as components. The powder material contains at least a Si phase and a SiX compound phase. Here, the element X is at least one selected from Fe, Ti, Cr, Mn, Co, Ni, Zr, B, and P.

The Si phase is composed of Si in which the element X is dissolved. The SiX compound phase is composed of a compound (intermetallic compound) of Si and the element X. At least a part of the Si phase and the SiX compound phase may form an oxide. The Si phase preferably includes 90 mass% or mor of Si. The SiX compound phase preferably includes 90 mass% or mor of SiX compound.

When the Si phase and the SiX compound phase, and an XY compound phase and a CuY compound phase to be described later are present, each of these phases independently constitutes particles , except for components that inevitably constitute the same particle. In the electrode active material, the particles formed of each phase are basically in a state where single particles (primary particles) are dispersed. Some of the particles may be aggregated through agglomeration or binding via a binder, but the particles are preferably in the form of a single particle dispersion, excluding the aggregated particles that are inevitably formed.

In the electrode active material, the Si phase exhibits a main contribution as an active material, but the inclusion of the SiX compound phase in addition to the Si phase prevents the collapse of particles due to a volume change accompanying occlusion of Li ions. This is because the SiX compound phase hardly causes a volume change due to the occlusion of Li ions. The collapse of the particles is prevented, and thus cycle characteristics of the electrode active material, that is, maintainability of battery characteristics such as battery capacity after repeated charging and discharging cycles become excellent.

As the element X, at least one of the elements listed above can be adopted without limitation, but the element X preferably includes at least Fe from the viewpoint of both reducing material costs and improving cycle characteristics. In addition, from the viewpoint of increasing the content of the element X dissolved in the Si phase and improving the battery characteristics, the element X preferably includes two or more elements selected from those listed above. That is, the electrode active material most preferably includes Fe and one or more elements other than Fe among the elements listed above. The element X dissolved in the Si phase and the element X forming a compound in the SiX compound phase may be the same or different, but are typically the same. The content of the element X in the electrode active material is not particularly limited, but the content of the element X is preferably 0.1 mass% or more and 30 mass% or less relative to the entire powder material. A ratio between the Si phase and the SiX compound phase is also not particularly limited, but for example, a proportion of a SiX compound in the entire powder material may be 0.1 mass% or more and 60 mass% or less.

The powder material constituting the electrode active material preferably further contains at least one of the XY compound phase and the CuY compound phase in addition to the Si phase and the SiX compound phase. Here, the element Y is at least one of Sn and Al. The XY compound phase is composed of a compound of the element X and the element Y, and the CuY compound phase is composed of a compound of Cu and the element Y. At least a part of the XY compound phase and the CuY compound phase may form an oxide. The XY compound phase preferably includes 90 mass% or more of XY compound. The CuY compound phase preferably includes 90 mass% or more of CuY compound.

Since the XY compound phase and the CuY compound phase exhibit slight volume expansion accompanying the occlusion of Li ions, when at least one of the XY compound phase and the CuY compound phase is contained in the powder material included in the electrode active material together with the Si phase and the SiX compound phase, a buffering effect of reducing a difference in volume expansion coefficient between the Si phase and the SiX compound phase is exhibited. Therefore, in the electrode active material, these phases play a role in preventing collapse of particles due to the occlusion of Li ions and effectively enhancing the cycle characteristics. The powder material included in the electrode active material may contain only one or both of the XY compound phase and the CuY compound phase, but when Cu is contained in the composition, at least the CuY compound phase is easily formed. On the other hand, when Cu is not contained in the composition or when Cu is contained in a small amount, the XY compound phase is easily formed. In addition, when the XY compound phase is formed, a Y phase composed of a simple substance of the element Y may be contained in the powder material included in the electrode active material together with the XY compound phase.

As described above, a specific composition of the element Y is not particularly limited as long as the element Y is at least one of Sn and Al, but the element Y preferably includes at least Sn. The element Y constituting the XY compound phase and the element Y constituting the CuY compound phase may be the same or different, but are typically the same. The content of the element Y in the electrode active material is not particularly limited, but the content of the element Y is preferably 0.1 mass% or more and 5.0 mass% or less relative to the entire powder material. In addition, when the CuY compound phase is contained, the content of Cu is not particularly limited, but the content of the element Cu is preferably 0.1 mass% or more and 3.0 mass% or less relative to the entire powder material. The proportions of the XY compound phase and the CuY compound phase in the powder material are not particularly limited, but for example, a total proportion of the XY compound phase and the CuY compound phase in the entire powder material may be 0.1 mass% or more and 15 mass% or less.

The electrode active material may be composed of only the powder material containing the Si phase, the SiX compound phase, and optionally at least one of the XY compound phase and the CuY compound phase. However, when sufficient conductivity for constituting the negative electrode of the lithium ion secondary battery cannot be obtained with only the powder material, a substance for compensating the conductivity may be appropriately added to constitute the negative electrode. As such a substance, at least one of a conductive additive mixed with the powder material and a coating (conductive coating) of a conductive material covering the surface of the particles of the powder material can be suitably used. In particular, the conductive coating is preferably formed on the particle surface. As the conductive additive, a carbon powder can be suitably used. As the conductive coating, a carbon coating can be suitably used. Preferred examples of the carbon material constituting the conductive additive and the conductive coating include graphite, acetylene black, Ketjen black, carbon nanotubes, and carbon nanofibers. When the carbon coating is formed, the amount of the coating is preferably 0.3 mass% or more, further preferably 0.8 mass% or more, still further preferably 1.0 mass% or more, and preferably 10 mass% or less, further preferably 6 mass% or less, and still further preferably 5 mass% or less relative to the amount of carbon in the entire electrode active material.

In addition to the conductive additive and the conductive coating, examples of the material that can constitute the electrode active material together with the powder material include a binder. The binder is made of an organic polymer and has a function of binding particles together. Specific examples of the binder include polyacrylic acid (PAA), watersoluble polyacrylate, polyvinyl alcohol (PVA), polyvinyl butyral (PVB), polyvinylidene fluoride (PVDF), and polyimide (PI), and among these, PAA is most preferably used. PAA is easily removed by heating, and thus, in a production method to be described later, a high effect of reducing a particle diameter by a disintegration step is obtained. The amount of binder in the electrode active material is, in terms of total carbon amount of the carbon coating and the binder, preferably 0.3 mass% or more and 10 mass% or less relative to the entire electrode active material.

### (2) Particle Size Distribution

The powder material constituting the electrode active material according to the present embodiment has a predetermined particle size distribution. That is, a cumulative 50% particle diameter D50 is 0.1 µm or more and 1.0 µm or less. A cumulative 99% particle diameter D99 is 3.0 µm or less. The particle size distribution is collectively defined for all particles including the Si phase and the SiX compound phase constituting the powder material, and the XY compound phase and the CuY compound phase if contained, without distinguishing the particle species. In addition, as described above, the particles in the powder material are basically in a state where the primary particles are dispersed, and the particle size distribution is defined for the primary particles. However, when the aggregated particles formed by agglomeration or binding via a binder are partially included, the particle size distribution is defined for the aggregate particles, including the contribution of a particle diameter (secondary particle diameter) of the entire aggregated particles. In the present description, the particle size distribution is defined as a volume-based cumulative particle size distribution, and is suitably evaluated by a laser diffraction/scattering particle size distribution measuring method. Even when the conductive coating is formed on the particle surface, a thickness of the coating is negligible with respect to the particle diameter, and thus the particle size distribution may be evaluated in a state where the conductive coating is formed.

When the particle diameter of the powder material is large, adjacent particles come into contact with each other due to the expansion of the Si phase particles accompanying the occlusion of Li ions, and collapse is likely to occur. However, by setting D50 of the powder material to 1.0 µm or less, the collapse of such particles can be prevented, and the cycle characteristics of the electrode active material can be improved. From the viewpoint of enhancing the effect, D50 is preferably 0.8 µm or less, and more preferably 0.6 µm or less.

On the other hand, when the powder material constituting the electrode active material is excessively refined, a problem may occur. Examples of such problem includes that a specific surface area of the powder material increases, and agglomerate of the particles easily occurs. The agglomerate of the particles may lead to deterioration of battery characteristics such as deterioration of cycle characteristics. When the specific surface area of the powder material increases, it is necessary to use a large amount of binder when the electrode active material is formed into an electrode. Then, a proportion of an active material in the electrode decreases, and the battery characteristics deteriorate. In addition, another problem due to excessive refinement is the deterioration in handleability of the electrode active material. However, when D50 of the powder material constituting the electrode active material is set to 0.1 µm or more, the problem due to the excessive refinement of the particles constituting the electrode active material does not affect the practical use. From the viewpoint of enhancing the effect, D50 is preferably 0.12 µm or more, and more preferably 0.15 µm or more.

The fact that D99 of the powder material constituting the electrode active material is 3.0 µm or less means that even in a small amount of the particle material, large-diameter particles are not contained in the powder material, and the particle size distribution of the powder material is sharp, falling within a narrow particle size range. Accordingly, the electrode active material exhibits excellent battery characteristics such as cycle characteristics with high homogeneity. From the viewpoint of enhancing the effect, D99 is preferably 2.0 µm or less, and more preferably 1.5 µm or less. A lower limit of D99 is not particularly limited, but may be, for example, 0.5 µm or more, and more preferably 0.7 µm or more.

As described above, since D50 is 0.1 µm or more and 1.0 µm or less and D99 is 3.0 µm or less in the powder material constituting the electrode active material, high cycle characteristics can be obtained without excessively refining particles in the electrode active material. The powder material having such a particle size distribution can be suitably obtained by wet pulverization of an alloy material and granulation using a binder to form granules, followed by disintegration of these granules, as in a method for producing an electrode active material according to an embodiment of the present invention to be described below. As described above, not only the electrode active material (a first embodiment of electrode active material of the present invention) containing the powder material having D50 of 0.1 µm or more and 1.0 µm or less and D99 of 3.0 µm or less, but also an electrode active material (a second embodiment of electrode active material of the present invention) containing a powder material with reduced particle diameter and a sharp particle size distribution while preventing excessive refinement can be produced by employing a method for producing an electrode active material according to an embodiment of the present invention to be described below.

### [Method for Producing Electrode Active Material]

Hereinafter, the method for producing an electrode active material according to an embodiment of the present invention will be described. In the method for producing an electrode active material according to the present embodiment, an atomization step, a pulverization step, a granulation step, and a disintegration step are performed in this order. Furthermore, although optional, it is preferable to perform a heat treatment step between the granulation step and the disintegration step, and perform a coating forming step after the disintegration step. Hereinafter, each step will be described in order.

### (1) Atomization Step

In the atomization step, a Si alloy powder is prepared by an atomization method. The Si alloy powder may be produced as an alloy powder containing desired component elements in a desired ratio in the component composition of the entire powder material constituting an electrode active material to be produced. That is, an alloy powder containing Si and the element X (at least one selected from Fe, Ti, Cr, Mn, Co, Ni, Zr, B, and P) and further containing the element Y (at least one of Sn and Al) as necessary may be produced. As the atomization method, any method such as a water atomization method and a gas atomization method may be used, but the gas atomization method is preferably used. In the obtained Si alloy powder, the Si phase and SiX compound phase are crystallized, and further, depending on the component composition, the XY compound phase and/or CuY compound phase are also crystallized.

### (2) Pulverization Step

In the pulverization step, the Si alloy powder obtained in the atomization step is pulverized by a wet pulverization method. A specific method of pulverization is not particularly specified, and wet pulverization using an attritor, wet pulverization using a bead mill, and the like can be suitably applied. It is also preferable to combine a plurality of pulverization methods, such as first pulverizing using an attritor and then pulverizing using a bead mill. By adjusting the conditions of the pulverization step, a particle diameter of the powder material in an electrode active material to be finally produced can be effectively controlled. For example, the particle diameter of the powder material is reduced as a whole by increasing the time for performing the pulverization step. A solvent (a dispersion medium) used in the wet pulverization step is not particularly limited, and water, an alcohol-based solvent, an amide-based solvent, or the like can be used.

By the pulverization step, a slurry is obtained in which particles containing the Si phase and the SiX compound phase, and further the XY compound phase and/or the CuY compound phase depending on the component composition are dispersed in a solvent. As described above, in the Si alloy powder obtained in the atomization step, a plurality of phases are crystallized, and the plurality of phases coexist inside at least some of the particles, but the plurality of phases are basically separated into independent particles through the pulverization step. That is, the slurry is obtained in which a mixture of Si particles, SiX compound particles, and XY compound particles and/or CuY compound particles depending on the component composition is dispersed.

### (3) Granulation Step

In the granulation step, the slurry prepared in the pulverization step is used to form granules. In order to form the granules, a spray drying method is applied to a mixture obtained by mixing the slurry with the binder. In the spray drying method, granules in which a plurality of particles are bound by a binder are formed by forming the mixture into fine droplets and instantaneously drying the droplets with hot air to remove the solvent. In the spray drying method, drying proceeds with granulation, and the granules are obtained in a dried state.

As the binder, various organic polymers can be used, and particularly, PAA can be suitably used, as described above. The content of the binder in the mixture used as a raw material for the spray drying method is preferably 1 mass% or more and 50 mass% or less. When the content of the binder is 1 mass% or more, an increase in flammability of the electrode active material caused by exposing surface of small-diameter particles can be prevented, and the flame resistance can be enhanced. On the other hand, when the content of the binder is 50 mass% or less, in the disintegration step after the appropriate heat treatment step, the binding of the particles in the granules by the binder is eliminated, making it easier to reduce the particle diameter. More preferably, the content of the binder is 3 mass% or more and 20 mass% or less.

### (4) Heat Treatment Step

In the heat treatment step, the granules obtained in the granulation step are subjected to a heat treatment. The heat treatment is performed by heating the granules in a dry manner using a heating furnace or the like. Through the heat treatment step, at least a part of the binder constituting the granules is removed. In particular, when the binder is PAA, the removal of the binder easily proceeds. Examples of a heating temperature in the heat treatment step include 500°C or higher and 1000°C or lower.

### (5) Disintegration Step

In the disintegration step, the granules obtained in the granulation step and optionally subjected to the heat treatment step are disintegrated. The disintegration step is performed in a dry manner. For example, when the granules are introduced into a jet mill and the granules are accelerated in a container by a compressed gas, the disintegration can be performed through repeated contact and friction between the granules.

In the granules, a plurality of particles are bound and aggregated via a binder, but the binding is eliminated by performing the disintegration step, and the particles constituting the granules are dispersed in a single particle state. Alternatively, even if the particles do not reach the state of single particles, only fewer particles than the original granules are aggregated.

The disintegration step is a step of pulverizing particles more gently than the previous pulverization step, and extremely fine particles are less likely to be formed. In addition, the particle diameters after pulverization are relatively uniform, and a sharp particle size distribution is easily formed. Further, unlike the case where the particles are pulverized to a desired small diameter in the wet pulverization step and then the slurry is removed to obtain a powder material, when the disintegration step is performed, agglomerate of the particles hardly occurs, so that an increase in particle diameter due to agglomerate is prevented. As described above, in the method for producing an electrode active material according to the present embodiment, by performing the disintegration step on the granules once formed, it is possible to reduce the diameter of the particles while avoiding excessive refinement of the powder material, prevent collapse of the particles due to the occlusion of Li ions, and obtain an electrode active material exhibiting high cycle characteristics. Furthermore, the particle size distribution of the obtained powder material, such as specific values of D50 and D99, can be adjusted by controlling the conditions of the disintegration step, such as a pressure of the compressed gas of the jet mill, a feed rate of the material, and a duration of the disintegration step. In the disintegration step, the powder material having a sharp particle size distribution is easily obtained, and thus it is not necessary to separately perform classification of the powder material in the method for producing an electrode active material according to the present embodiment.

### (6) Coating Forming Step

In the coating forming step, a coating of a conductive material is formed on the particle surface of the powder material obtained through the disintegration step. When the coating is formed of a carbon coating, the coating can be formed by a vapor deposition method such as a chemical vapor deposition (CVD) method.

### (7) Other Steps

When the electrode active material contains a conductive additive, a powder of the conductive additive may be mixed with the powder material obtained by the above steps. When the negative electrode is prepared from the produced electrode active material, the electrode active material may be formed into a predetermined electrode shape. In the forming of the electrode, for example, a powder of the electrode active material can be appropriately mixed with a binder or a solvent to prepare a paste, and the paste can be applied onto a current collector. Here, the binder used for forming the electrode is distinguished from the binder used in the granulation step described above.

### EXAMPLES

Hereinafter, the present invention is described more specifically with reference to examples. Here, electrode active materials were prepared with various configurations, and characteristics thereof were compared.

### [Preparation of Sample]

Electrode active materials according to Examples 1 to 41 and Comparative Examples 1 to 6 were prepared as samples. In Examples 1 to 39, samples were prepared by the following basic production method. The other samples were produced by a production method in which a part of the basic production method was modified as described below as other production methods.

### (1) Basic Production Method

As a basic production method, an atomization step, a pulverization step, a granulation step, a heat treatment step, a disintegration step, and a coating forming step were carried out in this order according to the method for producing an electrode active material according to the embodiment of the present invention described above. In the atomization step, an alloy powder having a component composition shown in Table 1 was prepared by a gas atomization method using nitrogen gas. In the pulverization step, wet pulverization was performed by sequentially using an attritor and a bead mill. At this time, the pulverization time by the bead mill was 3 to 24 hours. In the granulation step, a spray drying method was performed using a raw material containing 5 mass% of PAA as a binder. In the heat treatment step, heating was performed at 800°C. In the disintegration step, granules were disintegrated using a jet mill. The particle size distribution of the powder material to be produced after the disintegration step was adjusted by controlling the pulverization time in the pulverization step and the disintegration conditions in the disintegration step. In the coating forming step, a carbon coating was formed on the particle surface of the powder material by a CVD method using hydrocarbon gas as a raw material for forming a conductive coating. The thickness of the carbon coating was adjusted depending on the CVD temperature and time. The amount of the carbon coating actually formed was confirmed as the amount of carbon in the entire electrode active material as shown in the section of the evaluation method.

### (2) Other Production Methods

As a production method in which a part of the basic production method was modified, the following production methods were applied to some examples and comparative examples.
Pulverization Time Extension (Comparative Example 1): The pulverization time using a bead mill in the pulverization step was set to 50 hours.
Pulverization Time Reduction (Comparative Example 2): The pulverization time using a bead mill in the pulverization step was set to 2 hours.
Binder Amount Reduction (Examples 40 and 41): In the granulation step, the amount of binder added to the raw material for the spray drying method was reduced compared to the basic production method. The content of the binder was 0.8 mass% in Example 40 and 0.9 mass% in Example 41.
Binder Change (Comparative Examples 3 and 4): In the granulation step, PVB, which is more likely to remain than PAA, was used as the binder instead of PAA. The content of the binder was set to 5 mass% in Comparative Example 3 and 15 mass% in Comparative Example 4. No Heat Treatment (Example 41 and Comparative Example 5): The heat treatment step in the basic production method was omitted, and the disintegration step was carried out directly after the granulation step.
No Disintegration (Comparative Example 6): The disintegration step in the basic production method was omitted, and the coating forming step was carried out directly after the heat treatment step.

### [Evaluation Method] <State of Electrode Active Material>

First, the state of the powdery electrode active material was evaluated.

### (1) Evaluation of Amount of Carbon

In order to evaluate the amount of the carbon coating formed in the coating forming step, the amount of carbon in the entire electrode active material of each sample was quantified. Quantification was performed on the prepared electrode active material by a combustion-infrared absorption method using a carbon/sulfur analyzer.

### (2) Evaluation of Particle Size Distribution

The particle size distribution of the electrode active material of each sample was evaluated by a laser diffraction/scattering particle size distribution measuring method using a laser diffraction particle size distribution analyzer (MT3300, manufactured by MicrotracBEL Corp.). In the obtained particle size distribution, a volume-based cumulative 50% particle diameter D50 and a volume-based cumulative 99% particle diameter D99 were obtained.

### (3) Analysis of Phase Ratio

The configuration of the phase in the electrode active material of each sample was analyzed by X-ray diffraction (XRD) measurement. The XRD measurement was performed using Co-Kα rays by a θ-2θ method with a 2θ range of 120° to 20°. A constituent phase present in each electrode active material was identified from an XRD analysis result. Further, the proportions of the Si phase, the SiX compound phase, and the total of the XY compound phase and the CuY compound phase (XY&CuY) were quantified. The method of quantifying the proportions, that is calculating the phase ratio, is described by taking the case of Example 6 as an example. (1) First, it is observed that the electrode active material of Example 6 includes a Si₂Fe phase as a SiX compound phase by XRD measurement. (2) The mass ratio of Si and Fe in the Si₂Fe phase is Si:Fe = 50.1:49.9. Corresponding to this, an amount of Si which forms a Si₂Fe with Fe is 7.78 × 50.1/49.9 = 7.81 (mass%) since the content of Fe is 7.78 mass% as shown in Table 1. The compound proportion of the SiX compound phase, that is Si₂Fe phase, is a total mass of Si and Fe constituting Si₂Fe, and in the case of Example 6, it is 7.81 + 7.78 = 15.6 mass%. (3) Further, the compound proportion of the Si phase is determined by subtracting the amount of Si constituting the SiX compound phase determined in (2) from all content of Si in the sample. In the case of Example 6, the compound proportion of the Si phase is 91.51 - 7.81 = 83.7 mass%. Finally, the proportion of the total of the XY compound phase and the CuY compound phase (XY&CuY) is determined by subtracting the proportions of the Si phase and the SiX compound phase from 100%. In the case of Example 6, it is 100 - 83.7 - 15.6 = 0.7 mass%.

### (4) Evaluation of Flame Resistance

In order to evaluate the flame resistance of the electrode active material of each sample, a small gas flame ignition test was performed in accordance with the Class 2 hazardous material test. In the small gas flame ignition test, a small gas flame was brought into contact with the electrode active material, and a sample that did not ignite within 10 seconds was evaluated as having high flame resistance. On the other hand, the sample that ignited within 10 seconds was evaluated as having low flame resistance.

### <Battery Characteristics of Electrode Active Material>

Further, the battery characteristics were evaluated using the electrode obtained by forming each electrode active material into electrode.

### (1) Preparation of Coin-type Battery for Charging and Discharging Test

First, 100 parts by mass of the electrode active material of each sample prepared above, 5 parts by mass of acetylene black (manufactured by Denka Company Limited) as a conductive additive, and 15 parts by mass of polyimide as a binder were blended and mixed with N-methyl-2-pyrrolidone (NMP) as a solvent to prepare a paste containing the electrode active material.

Next, a coin-type half battery was prepared as follows. Here, for sake of simple evaluation, an electrode prepared using the electrode active material was used as a test electrode, and a Li foil was used as a counter electrode. First, each paste prepared above was applied to a surface of a stainless steel (SUS) 316L foil having a thickness of 20 µm as a current collector using a doctor blade method so as to have a thickness of 30 µm, followed by drying to form an electrode active material layer. After the formation of the electrode active material layer, the electrode active material layer was compacted by a roll press and then punched into a disk shape having a diameter of 11 mm to obtain a test electrode.

Next, a Li foil (thickness: 500 µm) was punched into substantially the same shape as the test electrode to prepare a counter electrode. In addition, a non-aqueous electrolytic solution was prepared by dissolving LiPF₆ at a concentration of 1 mol/l in an equivalent mixed solvent of ethylene carbonate (EC) and diethyl carbonate (DEC). The test electrode was housed in a positive electrode can (the test electrode is one to be a negative electrode in a lithium secondary battery, but when the counter electrode is a Li foil, the Li foil is the negative electrode, and the test electrode is the positive electrode), the counter electrode was housed in a negative electrode can, and a polyolefin-based microporous film separator was disposed between the test electrode and the counter electrode. Next, the non-aqueous electrolytic solution was injected into both cans, and the negative electrode can and the positive electrode can were crimped and fixed to each other. Accordingly, a coin-type battery was obtained.

### (2) Charging and Discharging Test

One cycle including constant current charging and discharging at a current value of 0.2 mA was performed using the prepared coin-type half battery. The values obtained by dividing capacities (mAh) during charging and discharging by the amount (g) of the electrode active material were defined as an initial charge capacity and an initial discharge capacity (mAh/g), respectively. A ratio of the initial discharge capacity to the initial charge capacity was determined as an initial Coulombic efficiency (initial discharge capacity/initial charge capacity × 100%).

Separately, a theoretical capacity of each electrode active material was calculated based on the phase ratio of the Si phase, the SiX compound phase, the XY compound phase, and the CuY compound phase. A ratio of the initial discharge capacity actually measured above to the theoretical capacity was determined and used as an active material utilization rate (initial discharge capacity/theoretical capacity × 100%).

Further, the charging and discharging test performed for one cycle as described above was also performed for the second and subsequent cycles. However, in the second cycle and thereafter, the charging and discharging test was performed at a 1/5C rate. Here, in the C rate, the current value for (charging and) discharging an amount of electricity required to (charge and) discharging the electrode in 1 hour is defined as 1C. 5C means (charging) and discharging in 12 minutes, and 1/5C means (charging) and discharging in 5 hours. The charging and discharging cycles were performed 50 times, and a ratio of a discharge capacity at the 50th cycle to an initial discharge capacity at the second cycle was calculated and defined as a capacity retention rate (discharge capacity at the 50th cycle/discharge capacity at the second cycle × 100%). When the capacity retention rate is 80% or more, the cycle characteristics can be considered to be sufficiently high.

### [Test Results]

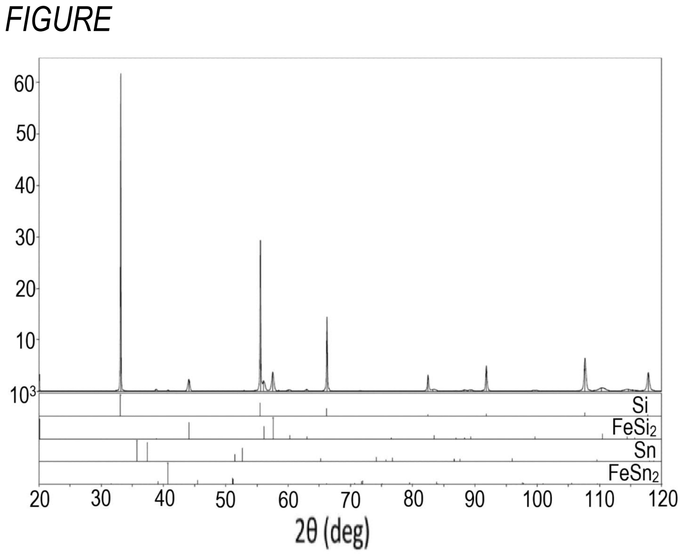

For Examples 1 to 41 and Comparative Examples 1 to 6, the component composition and the production method of the powder material constituting each electrode active material are shown in Table 1 below, and the evaluation results are shown in Table 2. The FIGURE shows XRD measurement results of an electrode active material of Example 35 as a representative example.

**[Table 1]**

| | | Component composition (mass%) | | | | | | | | | | | | | Production method |
|---|---|---|---|---|---|---|---|---|---|---|---|---|---|---|---|
| | | Si | Cu | Element X | | | | | | | | | Element Y | | |
| | | | | Fe | Ti | Cr | Mn | Co | Ni | Zr | B | P | Sn | Al | |
| | 1 | 87.97 | 0.23 | 11.44 | - | - | - | - | - | - | - | - | 0.36 | - | Basic production method |
| | 2 | 79.34 | 0.21 | 20.13 | - | - | - | - | - | - | - | - | 0.32 | - | Basic production method |
| | 3 | 88.33 | 0.04 | 11.57 | - | - | - | - | - | - | - | - | 0.07 | - | Basic production method |
| | 4 | 92.05 | 0.06 | 7.80 | - | - | - | - | - | - | - | - | 0.09 | - | Basic production method |
| | 5 | 86.81 | 2.26 | 7.43 | - | - | - | - | - | - | - | - | 3.51 | - | Basic production method |
| | 6 | 91.51 | 0.28 | 7.78 | - | - | - | - | - | - | - | - | 0.43 | - | Basic production method |
| | 7 | 84.27 | 0.05 | 15.61 | - | - | - | - | - | - | - | - | 0.08 | - | Basic production method |
| | 8 | 70.58 | 0.69 | 27.65 | - | - | - | - | - | - | - | - | 1.08 | - | Basic production method |
| | 9 | 95.16 | 0.30 | 4.08 | - | - | - | - | - | - | - | - | 0.46 | - | Basic production method |
| | 10 | 80.71 | 0.21 | 18.75 | - | - | - | - | - | - | - | - | 0.33 | - | Basic production method |
| | 11 | 89.67 | 0.34 | 9.47 | - | - | - | - | - | - | - | - | 0.53 | - | Basic production method |
| Examples | 12 | 83.72 | 0.05 | 16.02 | - | - | - | - | - | - | - | 0.14 | 0.08 | - | Basic production method |
| | 13 | 79.93 | 0.23 | 19.31 | - | - | - | - | - | - | 0.06 | 0.10 | 0.36 | - | Basic production method |
| | 14 | 80.51 | 0.12 | 19.08 | - | - | - | - | - | - | 0.09 | - | 0.19 | - | Basic production method |
| | 15 | 89.06 | - | 8.31 | 2.63 | - | - | - | - | - | - | - | - | - | Basic production method |
| | 16 | 88.66 | - | 9.12 | - | 2.22 | - | - | - | - | - | - | - | - | Basic production method |
| | 17 | 88.23 | - | 8.69 | - | - | 3.08 | - | - | - | - | - | - | - | Basic production method |
| | 18 | 88.23 | - | 9.83 | - | - | - | 1.94 | - | - | - | - | - | - | Basic production method |
| | 19 | 89.07 | - | 9.21 | - | - | - | - | 1.72 | - | - | - | - | - | Basic production method |
| | 20 | 88.95 | - | 8.50 | - | - | - | - | - | 2.55 | - | - | - | - | Basic production method |
| | 21 | 99.90 | - | - | - | - | - | - | - | - | - | 0.10 | - | - | Basic production method |
| | 22 | 99.79 | - | - | - | - | - | - | - | - | 0.12 | 0.09 | - | - | Basic production method |
| | 23 | 99.86 | - | - | - | - | - | - | - | - | 0.14 | - | - | | Basic production method |

**[Table 1] (continued)**

| | | Component composition (mass%) | | | | | | | | | | | | | Production method |
|---|---|---|---|---|---|---|---|---|---|---|---|---|---|---|---|
| | | Si | Cu | Element X | | | | | | | | | Element Y | | |
| | | | | Fe | Ti | Cr | Mn | Co | Ni | Zr | B | P | Sn | Al | |
| Examples | 24 | 87.76 | 0.60 | 7.60 | 3.12 | - | - | - | - | - | - | - | 0.93 | - | Basic production method |
| | 25 | 88.19 | 0.22 | 8.29 | - | 2.95 | - | - | - | - | - | - | 0.35 | - | Basic production method |
| | 26 | 88.63 | 0.21 | 8.22 | - | - | 2.62 | - | - | - | - | - | 0.32 | - | Basic production method |
| | 27 | 87.77 | 0.14 | 9.14 | - | - | - | 2.73 | - | - | - | - | 0.22 | - | Basic production method |
| | 28 | 88.03 | 0.10 | 8.68 | - | - | - | - | 3.04 | - | - | - | 0.15 | - | Basic production method |
| | 29 | 87.02 | 0.53 | 8.51 | - | - | - | - | - | 3.12 | - | - | 0.82 | - | Basic production method |
| | 30 | 99.64 | 0.06 | 0.14 | - | - | - | - | - | - | 0.06 | - | 0.10 | - | Basic production method |
| | 31 | 99.29 | 0.19 | 0.03 | - | - | - | - | - | - | 0.04 | 0.15 | 0.30 | - | Basic production method |
| | 32 | 99.41 | 0.17 | 0.06 | - | - | - | - | - | - | - | 0.09 | 0.27 | - | Basic production method |
| | 33 | 86.41 | 0.45 | 12.76 | - | - | - | - | - | - | - | - | - | 0.38 | Basic production method |
| | 34 | 65.64 | 7.50 | 15.20 | - | - | - | - | - | - | - | - | 11.66 | - | Basic production method |
| | 35 | 86.16 | - | 13.46 | - | - | - | - | - | - | - | - | 0.38 | - | Basic production method |
| | 36 | 89.46 | - | 10.12 | - | - | - | - | - | - | - | - | 0.42 | - | Basic production method |
| | 37 | 91.90 | - | 7.70 | - | - | - | - | - | - | - | - | 0.40 | - | Basic production method |
| | 38 | 38.83 | - | 19.44 | - | - | - | - | - | - | - | - | 0.34 | - | Basic production method |
| | 39 | 82.80 | - | 12.58 | - | - | - | - | - | - | - | - | 4.62 | - | Basic production method |
| | 40 | 86.35 | 0.09 | 13.42 | - | - | - | - | - | - | - | - | 0.14 | - | Binder amount reduction (0.8%) |
| | 41 | 87.03 | 0.15 | 12.58 | - | - | - | - | - | - | - | - | 0.24 | - | Binder amount reduction (0.9%) No heat treatment |
| Comparative examples | 1 | 88.91 | 0.17 | 10.66 | - | - | - | - | - | - | - | - | 0.26 | - | Pulverization time extension |
| | 2 | 84.83 | 0.12 | 14.87 | - | - | - | - | - | - | - | - | 0.18 | - | Pulverization time reduction |
| | 3 | 90.66 | 0.09 | 9.12 | - | - | - | - | - | - | - | - | 0.14 | - | Binder change (5%) |
| | 4 | 88.53 | 0.06 | 11.32 | - | - | - | - | - | - | - | - | 0.09 | - | Binder change (15%) |
| | 5 | 88.82 | 0.17 | 10.75 | - | - | - | - | - | - | - | - | 0.26 | - | No heat treatment |
| | 6 | 88.51 | 0.18 | 11.03 | - | - | - | - | - | - | - | - | 0.28 | - | No disintegration |

**[Table 2]**

| | | State of electrode active material | | | | | | | Battery characteristics | | |
|---|---|---|---|---|---|---|---|---|---|---|---|
| | | Amount of carbon (mass%) | Particle size distribution | | Phase ratio (mass%) | | | Flame resistance | Initial Coulombic efficiency (%) | Active material utilization rate (%) | Capacity retention rate (%) |
| | | | D50 (µm) | D99 (µm) | Si phase | SiX phase | XY&CuY | | | | |
| Examples | 1 | 3.3 | 0.45 | 1.11 | 76.5 | 23.0 | 0.6 | High | 87.4 | 89 | 88.2 |
| | 2 | 1.8 | 0.53 | 1.27 | 59.1 | 40.4 | 0.5 | High | 88.1 | 96 | 87.2 |
| | 3 | 2.7 | 0.36 | 0.97 | 76.7 | 23.2 | 0.1 | High | 85.9 | 96 | 92.1 |
| | 4 | 2.2 | 0.34 | 0.95 | 84.2 | 15.6 | 0.1 | High | 90.2 | 82 | 86.9 |
| | 5 | 3.2 | 0.55 | 1.32 | 79.3 | 14.9 | 5.8 | High | 87.4 | 94 | 87.1 |
| | 6 | 5.4 | 0.92 | 2.59 | 83.7 | 15.6 | 0.7 | High | 87.3 | 85 | 89.0 |
| | 7 | 2.6 | 0.13 | 0.83 | 68.6 | 31.3 | 0.1 | High | 80.9 | 84 | 95.4 |
| | 8 | 6.0 | 0.54 | 1.30 | 42.8 | 55.5 | 1.8 | High | 83.1 | 84 | 90.9 |
| | 9 | 4.2 | 0.46 | 1.13 | 91.1 | 8.2 | 0.8 | High | 89.5 | 89 | 82.2 |
| | 10 | 0.8 | 0.42 | 1.06 | 61.8 | 37.6 | 0.5 | High | 88.9 | 87 | 84.1 |
| | 11 | 8.7 | 0.23 | 0.86 | 80.1 | 19.0 | 0.9 | High | 87.5 | 89 | 86.2 |
| | 12 | 2.6 | 0.58 | 1.39 | 67.5 | 32.4 | 0.1 | High | 90.1 | 90 | 90.9 |
| | 13 | 4.3 | 0.36 | 0.97 | 60.4 | 39.0 | 0.6 | High | 86.4 | 81 | 82.3 |
| | 14 | 5.9 | 0.24 | 0.86 | 61.3 | 38.4 | 0.3 | High | 84.5 | 82 | 88.5 |
| | 15 | 2.9 | 0.28 | 0.89 | 77.6 | 22.4 | 0.0 | High | 83.3 | 94 | 92.7 |
| | 16 | 2.6 | 0.57 | 1.36 | 77.1 | 22.9 | 0.0 | High | 85.1 | 97 | 90.5 |
| | 17 | 1.0 | 0.37 | 1.00 | 76.8 | 23.2 | 0.0 | High | 89.3 | 95 | 91.3 |
| | 18 | 4.3 | 0.29 | 0.90 | 76.5 | 23.5 | 0.0 | High | 84.4 | 81 | 85.2 |
| | 19 | 5.7 | 0.44 | 1.09 | 78.2 | 21.8 | 0.0 | High | 85.3 | 91 | 86.9 |
| | 20 | 1.8 | 0.29 | 0.90 | 78.8 | 21.2 | 0.0 | High | 88.6 | 92 | 94.7 |
| | 21 | 3.7 | 0.34 | 0.95 | 99.8 | 0.2 | 0.0 | High | 88.4 | 94 | 95.2 |
| | 22 | 4.6 | 0.57 | 1.38 | 99.7 | 0.3 | 0.0 | High | 87.9 | 89 | 80.3 |
| | 23 | 3.2 | 0.56 | 1.34 | 99.8 | 0.2 | 0.0 | High | 88.8 | 88 | 93.3 |
| | 24 | 2.0 | 0.35 | 0.96 | 76.5 | 22.0 | 1.5 | High | 86.1 | 82 | 91.3 |
| | 25 | 3.1 | 0.40 | 1.03 | 76.7 | 22.8 | 0.6 | High | 82.1 | 90 | 81.0 |
| | 26 | 1.6 | 0.53 | 1.28 | 78.0 | 21.4 | 0.5 | High | 84.8 | 81 | 92.4 |
| | 27 | 2.3 | 0.29 | 0.90 | 76.0 | 23.7 | 0.4 | High | 82.0 | 97 | 95.5 |
| | 28 | 4.0 | 0.32 | 0.93 | 76.4 | 23.4 | 0.3 | High | 89.3 | 85 | 80.0 |
| | 29 | 5.8 | 0.50 | 1.21 | 76.5 | 22.1 | 1.4 | High | 86.1 | 86 | 87.3 |
| | 30 | 2.5 | 0.20 | 0.85 | 99.5 | 0.4 | 0.2 | High | 86.4 | 90 | 80.6 |
| | 31 | 2.1 | 0.28 | 0.89 | 99.1 | 0.4 | 0.5 | High | 84.9 | 86 | 88.7 |
| | 32 | 4.4 | 0.32 | 0.93 | 99.3 | 0.3 | 0.4 | High | 89.4 | 97 | 80.7 |
| | 33 | 2.0 | 0.50 | 1.21 | 73.2 | 26.0 | 0.8 | High | 84.5 | 92 | 80.9 |
| | 34 | 5.3 | 0.22 | 0.85 | 50.4 | 30.5 | 19.2 | High | 84.5 | 92 | 87.1 |
| | 35 | 5.5 | 0.55 | 1.33 | 72.6 | 26.8 | 0.6 | High | 88.5 | 85 | 82.0 |
| | 36 | 3.4 | 0.27 | 0.88 | 79.3 | 20.1 | 0.6 | High | 90.1 | 86 | 83.9 |
| | 37 | 3.1 | 0.25 | 0.87 | 84.2 | 15.3 | 0.6 | High | 89.3 | 81 | 83.9 |
| | 38 | 1.3 | 0.51 | 1.23 | 60.7 | 38.8 | 0.5 | High | 86.5 | 85 | 85.7 |
| | 39 | 1.4 | 0.47 | 1.15 | 70.2 | 23.0 | 6.8 | High | 82.5 | 83 | 94.6 |
| | 40 | 1.7 | 0.62 | 1.50 | 72.9 | 26.9 | 0.2 | Low | 87.8 | 88 | 91.2 |
| | 41 | 1.4 | 0.47 | 1.15 | 74.4 | 25.2 | 0.4 | Low | 87.6 | 85 | 90.5 |
| Comparative examples | 1 | 3.0 | 0.05 | 0.85 | 78.2 | 21.4 | 0.4 | High | 83.0 | 94 | 31.6 |
| | 2 | 2.5 | 1.86 | 9.32 | 69.9 | 29.8 | 0.3 | High | 81.0 | 92 | 71.4 |
| | 3 | 2.7 | 0.65 | 3.62 | 81.5 | 18.3 | 0.2 | High | 88.7 | 93 | 66.6 |
| | 4 | 3.5 | 0.71 | 5.82 | 77.1 | 22.7 | 0.1 | High | 89.1 | 91 | 53.7 |
| | 5 | 4.1 | 1.27 | 4.53 | 78.0 | 21.6 | 0.4 | High | 88.2 | 89 | 56.8 |
| | 6 | 5.2 | 6.94 | 133.07 | 77.4 | 22.1 | 0.5 | High | 89.3 | 90 | 49.7 |

According to Tables 1 and 2, in each of Examples 1 to 41, the electrode active material contained at least Si and the element X, and was produced by a production method including the step of disintegrating granules once formed. An electrode active material containing the Si phase and the SiX compound phase at least and having D50 of 0.1 µm or more and 1.0 µm or less and D99 of 3.0 µm or less was obtained corresponding to the component composition and the production method. In each of Examples, a capacity retention ratio of 80% or more was obtained, and the electrode active material had high cycle characteristics.

In Examples 15 to 23, since neither Cu nor the element Y was contained, neither the XY compound phase nor the CuY compound phase was formed (the phase ratio of "XY&CuY" is zero). However, in other Examples 1 to 14 and 24 to 41, the element Y was contained, and at least one of the XY compound phase and the CuY compound phase was generated. Among Examples 1 to 14 and 24 to 41, Cu was not contained in Examples 35 to 39. The XRD chart of Example 35 is representatively shown in the upper part of the FIGURE. The lower part of the FIGURE shows library data on Si simple substance, Fe-Si compound (SiX compound), Sn simple substance, and Fe-Sn compound (XY compound). According to this XRD chart, it is confirmed that the Fe-Sn compound phase is generated in addition to the Si phase composed of Si in which X is dissolved and the SiX compound phase composed of the Fe-Si compound. A Sn phase is also generated. As described above, in Examples 35 to 39 in which Cu was not contained, the XY compound phase was generated in addition to the Si phase and the SiX compound phase. On the other hand, in Examples 1 to 14, 24 to 34, and 40 to 41 in which both Cu and the element Y were contained, at least the CuY compound phase was generated, and the XY compound phase was further generated in some samples.

Among Examples 1 to 41, only in Examples 40 and 41, the amount of the binder used in the granulation step was reduced as compared with other examples. In Examples 40 and 41, the battery characteristics are similar to those of other examples, but the flame resistance is low. It is interpreted that this is because a surface of a Si-containing particle having a small diameter is largely exposed due to a small amount of the binder, and it can be said that the samples are preferably used in applications where high flame resistance is not required. In Example 41, although the heat treatment was not carried out, the particle diameter of the prepared electrode active material does not become too large corresponding to the decrease in the amount of the binder, and D50 and D99 in the predetermined ranges are obtained.

Comparative Examples 1 to 6 have no particle size distribution in which D50 is 0.1 µm or more and 1.0 µm or less and D99 is 3.0 µm or less. In Comparative Example 1, since the time for performing the wet pulverization in the pulverization step was increased, D50 is small. In Comparative Example 2, since the time for performing the wet pulverization in the pulverization step was shortened, both D50 and D99 are large. In Comparative Examples 3 and 4, since the binder that is likely to remain was used, particles having a relatively large diameter were likely to remain without being sufficiently disintegrated, and D99 is large. In Comparative Example 5, since the heat treatment step was not carried out, the binder of the granules remained, which results in large D50 and D99. In Comparative Example 6, since the disintegration step was not carried out, the binding of the particles in the granules was not eliminated, and both D50 and D99 are significantly large. In the samples of Comparative Examples 1 to 6, both when D50 and/or D99 is large and when D50 and/or D99 is small, the capacity retention rate is less than 80%, and sufficiently high cycle characteristics are not obtained.

From the above test results, it can be seen that in the electrode active material including the powder material that contains at least the Si phase and the SiX compound phase and further optionally contains the XY compound phase and/or the CuY compound phase, when D50 is 0.1 µm or more and 1.0 µm or less and D99 is 3.0 µm or less, the electrode active material exhibits high cycle characteristics. In addition, by employing a production method in which granules are once formed and then disintegrated, it is possible to produce an electrode active material having such a controlled particle size distribution.

The embodiments of the present invention have been described above. The present invention is not particularly limited to these embodiments, and various modifications may be made.

The present application is based on Japanese Patent Application No. 2024-225617 filed on December 20, 2024, and the contents thereof are incorporated herein by reference.

## Claims

1. An electrode active material comprising:
a powder material that contains a Si phase composed of Si in which an element X is dissolved and a SiX compound phase composed of a compound of Si and the element X, wherein
the powder material has a cumulative 50% particle diameter, D50, of 0.1 µm or more and 1.0 µm or less and a cumulative 99% particle diameter, D99, of 3.0 µm or less, and
the element X is at least one selected from Fe, Ti, Cr, Mn, Co, Ni, Zr, B, and P.

2. The electrode active material according to claim 1, wherein the powder material further contains an XY compound phase composed of a compound of the element X and an element Y, and
the element Y is at least one of Sn and Al.

3. The electrode active material according to claim 1 or 2, wherein the powder material further contains a CuY compound phase composed of a compound of Cu and an element Y, and
the element Y is at least one of Sn and Al.

4. The electrode active material according to any one of claims 1 to 3, wherein the element X is Fe.

5. The electrode active material according to any one of claims 1 to 4, further comprising: at least one of a conductive additive mixed with the powder material and a coating of a conductive material covering a particle surface of the powder material.

6. The electrode active material according to claim 5, wherein the powder material comprises a carbon coating on the particle surface.

7. The electrode active material according to any one of claims 1 to 6, wherein the powder material has the cumulative 99% particle diameter, D99, of 2.0 µm or less.

8. The electrode active material according to claim 7, wherein the powder material has the cumulative 99% particle diameter D99 of 1.5 µm or less.

9. A method for producing an electrode active material, the method comprising:
an atomization step of preparing a Si alloy powder containing Si and an element X by an atomization method;
a pulverization step of pulverizing the Si alloy powder by a wet pulverization method to obtain a slurry in which particles containing a Si phase composed of Si in which the element X is dissolved and a SiX compound phase composed of a compound of Si and the element X are dispersed;
a granulation step of obtaining granules by a spray drying method from a mixture obtained by mixing the slurry with a binder; and
a disintegration step of disintegrating the granules, wherein
the atomization step, the pulverization step, the granulation step, and the disintegration step are carried out in this order,
the electrode active material comprises a powder material containing the Si phase and the SiX compound phase, and
the element X is at least one selected from Fe, Ti, Cr, Mn, Co, Ni, Zr, B, and P.

10. The method for producing an electrode active material according to claim 9, further comprising:
a heat treatment step of removing at least a part of the binder in the granules by performing a heat treatment on the granules between the granulation step and the disintegration step.

11. The method for producing an electrode active material according to claim 9 or 10, wherein the powder material has, in a particle size distribution, a cumulative 50% particle diameter D50 of 0.1 µm or more and 1.0 µm or less, and a cumulative 99% particle diameter D99 of 3.0 µm or less.

12. An electrode active material produced by the method for producing an electrode active material according to any one of claims 9 to 11.

13. A negative electrode including the electrode active material according to one of claims 1 to 8 or 12.

14. A lithium ion secondary battery including the negative electrode according to claim 13, a positive electrode, and a separator arranged therebetween.

15. The lithium ion secondary battery according to claim 14, being of a coin-type.
